# EUROPÄISCHE PATENTANMELDUNG

(11) **EP 4 764 237 A1**
(43) Veröffentlichungstag der Anmeldung: **24.06.2026**
(21) Anmeldenummer: 25216919.8
(22) Anmeldetag: 19.11.2025
(51) Int. Cl.: F16C 11/06, B60J 7/02, F16C 29/00

(54) **GELENKVERBINDUNG ZWISCHEN EINER KOPPELSTANGE UND EINEM SCHLITTEN EINER LINEARFÜHRUNG UND MONTAGEVERFAHREN**

(30) Priorität: 20.12.2024 DE 102024139513
(71) Anmelder: Stabilus GmbH, 56070 Koblenz (DE)
(72) Erfinder: Keßler, Jonathan, 56070 Koblenz, Germany (DE); Einig, Christian, 56070 Koblenz, Germany (DE); Joos, Rudolf, 56070 Koblenz, Germany (DE); Neitzert, Martin, 56070 Koblenz, Germany (DE)

(57) **Zusammenfassung**

Die Erfindung betrifft eine Gelenkverbindung (100) zwischen einer Koppelstange (110) und einem Schlitten (120) einer Linearführung mit einem Kugelkopf (111), der drehfest mit der Koppelstange (110) verbindbar oder verbunden ist, und mit einer Kugelpfanne (121), die im Schlitten (120) ausgebildet ist, wobei der Schlitten (120) eine Zugangsöffnung (125) aufweist, über welche der Kugelkopf (111) in die Kugelpfanne (121) einsetzbar ist und die zwei gegenüberliegende, jeweils geradlinig und parallel zueinander ausgerichtete seitliche Begrenzungen (126) aufweist, und wobei der Kugelkopf (111) zwei parallel zueinander ausgerichtete planare Seitenflächen (112) umfasst, deren Abstand zueinander höchstens dem Abstand der seitlichen Begrenzungen (126) entspricht. Ferner betrifft die Erfindung ein Montageverfahren für eine solche Gelenkverbindung.

## Beschreibung

Die Erfindung betrifft eine Gelenkverbindung zwischen einer Koppelstange und einem Schlitten einer Linearführung. Ferner betrifft die Erfindung ein Verfahren zur Montage einer solchen Gelenkverbindung.

Aus der Praxis sind Gelenkverbindungen bekannt, bei welchen ein Kugelkopf in eine Kugelpfanne eingesetzt ist. Eine solche Kugelpfanne kann beispielsweise in einem Schlitten einer Linearführung angeordnet sein, so dass über die Gelenkverbindung eine Koppelstange mit diesem Schlitten verbindbar ist. Der Kugelkopf weist üblicherweise eine sphärische Außenkontur auf, so dass die Koppelstange gegenüber dem Schlitten in drei Raumrichtungen verschwenkbar ist.

Um den Kugelkopf in der Gelenkpfanne zu halten, werden nach dem Einsetzen des Kugelkopfs in die Gelenkpfanne Begrenzungselemente in den Schlitten eingesetzt, die dafür Sorge tragen, dass der Kugelkopf die Kugelpfanne nicht mehr verlassen kann. Derartige Begrenzungselemente können beispielsweise Sicherungsringe oder Nutenringe sein. Es ist auch möglich, Bleche oder Bolzen in den Schlitten einzubringen, die eine Zugangsöffnung zur Gelenkpfanne teilweise verschließen, so dass der Kugelkopf die Gelenkpfanne nicht mehr verlassen kann.

Das Einbringen von zusätzlichen Begrenzungsmitteln in den Schlitten ist aufwändig und führt insbesondere in der Montage einer solchen Gelenkverbindung zu zeitlichen Verzögerungen und zusätzlichen Kosten.

Vor diesem Hintergrund liegt der Erfindung die Aufgabe zugrunde, eine Gelenkverbindung zwischen einer Koppelstange und einem Schlitten einer Linearführung anzugeben, die einen einfachen Aufbau aufweist und eine kostengünstige und schnelle Montage ermöglicht. Ferner ist es Aufgabe der Erfindung, eine Stellvorrichtung für ein relativ zur Karosserie eines Fahrzeugs bewegbares Fahrzeugteil mit einer solchen Gelenkverbindung anzugeben. Eine weitere Aufgabe der Erfindung besteht darin, ein Verfahren zur Montage einer vorstehend genannten Gelenkverbindung anzugeben.

Die Aufgabe wird erfindungsgemäß durch eine Gelenkverbindung mit den Merkmalen des Patentanspruchs 1, eine Stellvorrichtung mit den Merkmalen des Patentanspruchs 12 und ein Verfahren zur Montage einer Gelenkverbindung gemäß Patentanspruch 13 gelöst.

Demnach beruht die Erfindung auf dem Gedanken, eine Gelenkverbindung zwischen einer Koppelstange und einem Schlitten einer Linearführung anzugeben, wobei die Gelenkverbindung einen Kugelkopf aufweist, der drehfest mit der Koppelstange verbindbar oder verbunden ist. Ferner umfasst die Gelenkverbindung eine Kugelpfanne, die in dem Schlitten ausgebildet ist. Dabei weist der Schlitten eine Zugangsöffnung auf, über welche der Kugelkopf in die Kugelpfanne einsetzbar ist und welche zwei gegenüberliegende, jeweils geradlinig und parallel zueinander ausgerichtete seitliche Begrenzungen aufweist. Der Kugelkopf umfasst zwei parallel zueinander ausgerichtete planare Seitenflächen, deren Abstand zueinander höchstens dem Abstand der seitlichen Begrenzungen entspricht.

Dadurch wird beispielsweise der technische Vorteil erreicht, dass die Zugangsöffnung und der Kugelkopf geometrisch derart gestaltet werden, dass in einer bestimmten Ausrichtung von Kugelkopf und Zugangsöffnung zueinander ein Fügen der beiden Bauteile, nämlich des Kugelkopfs und der Kugelpfanne, möglich ist. Dazu weicht der Kugelkopf teilweise von seiner sphärischen Außenkontur auf, indem zwei parallel zueinander ausgerichtete planare Seitenflächen vorgesehen sind. Mit anderen Worten ist der Kugelkopf auf gegenüberliegenden Seiten abgeflacht.

Entsprechend weist die Zugangsöffnung seitliche Begrenzungen auf, die vorzugsweise einen Abstand zueinander haben, der kleiner als der Durchmesser der Kugelpfanne bzw. des Kugelkopfs ist. Wenn nun der Kugelkopf so ausgerichtet ist, dass dessen planare Seitenflächen parallel zu den seitlichen Begrenzungen der Zugangsöffnung ausgerichtet sind, dann lässt sich der Kugelkopf durch die Zugangsöffnung in die Kugelpfanne einsetzen. Durch eine anschließende Drehung des Kugelkopfs wird dieser im Anschluss in der Kugelpfanne verriegelt. Die seitlichen Begrenzungen der Zugangsöffnung verhindern in dieser Position, dass sich der Kugelkopf durch eine Bewegung entlang seiner Hauptrotationsachse, insbesondere in vertikaler Richtung, aus der Kugelpfanne herausbewegt.

Durch die erfindungsgemäße Gestaltung des Kugelkopfs und der Zugangsöffnung wird die Montage der Gelenkverbindung erheblich vereinfacht. Zusätzliche Schritte, wie das Einbringen von Begrenzungselementen in den Schlitten nach dem Einsetzen des Kugelkopfs in die Kugelpfanne werden so vermieden. Durch die vereinfachte Montage werden entsprechende Kosteneinsparungen im Montageprozess erzielt.

Bei einer bevorzugten Ausführungsform der erfindungsgemäßen Gelenkverbindung sind die planaren Seitenflächen des Kugelkopfs parallel zu einer Mittellängsachse der Koppelstange ausgerichtet. Generell ist es nicht zwingend, dass die Koppelstange eine geradlinige oder symmetrische Gestalt aufweist. Vielmehr kann die Koppelstange auch eine geschwungene Form haben. Üblicherweise weist die Koppelstange jedoch an ihren gegenüberliegenden Enden jeweils einen Anlenkpunkt, insbesondere ein Kugelkopfauge, für den Kugelkopf und eine Öse zur Verbindung mit weiteren Bauteilen auf. Die geradlinige Verbindung zwischen dem Mittelpunkt des Anlenkpunkts des Kugelkopfs (Kugelkopfauge) und dem Mittelpunkt der Öse definiert die Mittellängsachse der Koppelstange.

In einer vorteilhaften Weiterbildung der Erfindung sind die planaren Seitenflächen parallel zu einer Hauptrotationsachse des Kugelkopfs ausgerichtet. Der Kugelkopf weist vorzugsweise eine Hauptrotationsachse auf, die vorzugsweise senkrecht zur Koppelstange ausgerichtet ist. Insbesondere kann die Hauptrotationsachse des Kugelkopfs, wenn dieser in die Kugelpfanne eingesetzt ist, senkrecht zur Linearbewegungsrichtung des Schlittens ausgerichtet sein.

Der Kugelkopf kann außerdem eine planare Bodenfläche aufweisen, die parallel zu einer Mittellängsachse der Koppelstange und senkrecht zu einer Hauptrotationsachse des Kugelkopfs ausgerichtet ist. Die planare Bodenfläche kann außerdem in einer Ebene angeordnet sein, die senkrecht auf den Ebenen steht, die die planaren Seitenflächen beinhalten. Vorzugsweise ist die planare Bodenfläche gegenüberliegend zur Koppelstange ausgebildet. Die planare Bodenfläche kann außerdem mit einer Außenfläche der Koppelstange parallel ausgerichtet sein.

Komplementär zur planaren Bodenfläche des Kugelkopfs kann auch die Kugelpfanne eine planare Grundfläche aufweisen. Wenn der Kugelkopf in die Kugelpfanne eingesetzt ist, können die planare Bodenfläche und die planare Grundfläche flächig in Kontakt gelangen. Es ist jedoch auch möglich, dass zwischen der planaren Bodenfläche und der planaren Grundfläche ein Abstand vorliegt. Durch die planare Bodenfläche wird jedenfalls erreicht, dass eine Bewegung des Kugelkopfs in einer Raumrichtung beschränkt ist. Dies wirkt insbesondere dann, wenn die planare Bodenfläche dauerhaft mit der planaren Grundfläche in Kontakt ist. Dann ist eine Bewegung des Kugelkopfs lediglich in einer einzigen Achse, nämlich der Hauptrotationsachse des Kugelkopfs möglich.

Bei einer weiteren bevorzugten Ausführungsform der erfindungsgemäßen Gelenkverbindung weist die Kugelpfanne eine Vorspanneinrichtung zum Aufbringen einer radialen Vorspannung auf den Kugelkopf auf. Die radiale Vorspannung bewirkt, dass der Kugelkopf seine Position innerhalb der Kugelpfanne beibehält. Das erleichtert die weitere Montage der Gelenkverbindung innerhalb einer größeren Baugruppe, beispielsweise einer Stellvorrichtung eines Fahrzeugs. Eine solche Stellvorrichtung kann insbesondere für eine Fahrzeugtüre oder eine Fahrzeugklappe, beispielsweise eine Heckklappe, vorgesehen sein.

Insbesondere, wenn die Gelenkverbindung Teil einer Stellvorrichtung ist, vereinfacht die Vorspanneinrichtung die Montage der Stellvorrichtung an einem Fahrzeugteil. Durch die Vorspanneinrichtung behält die Koppelstange ihre Position bezüglich des Schlittens bei, so dass die Koppelstange bei der Endmontage einer mit der Gelenkverbindung ausgestatteten Stellvorrichtung in einem Fahrzeug nicht händisch geführt oder gehalten werden muss. Eine mit der hier beschriebenen Gelenkverbindung ausgestattete Stellvorrichtung ist folglich besonders einfach montierbar, so dass auch in späteren weiteren Montageschritten entsprechende Kosteneinsparungen erzielt werden, insbesondere durch den Verzicht auf zusätzliche Montagehilfsmittel, die andernfalls erforderlich wären.

Nach einer weiteren bevorzugten Ausführungsform kann die Vorspanneinrichtung mehrere Lagerzungen aufweisen, die zumindest abschnittsweise voneinander beabstandet sind und Schmiermitteltaschen begrenzen. Insbesondere können zwei diametral gegenüberliegende Lagerzungen vorgesehen sein, die die radiale Vorspannkraft auf den Kugelkopf aufbringen. Angrenzend an die Lagerzungen können Schmiermitteltaschen vorgesehen sein, welche Schmiermittel, beispielsweise Öl oder Fett, aufnehmen können. Die Schmiermitteltaschen können als längliche Kanäle in der Kugelpfanne ausgebildet sein, die vorzugsweise entlang der sphärischen Innenkontur der Kugelpfanne verlaufen. Die Schmiermitteltaschen können dabei sternförmig von der Grundfläche der Kugelpfanne ausgehen. Die Schmiermitteltaschen dienen als Vorratsspeicher für Schmiermittel, so dass der Kugelkopf in der Kugelpfanne dauerhaft geschmiert ist.

In diesem Zusammenhang ist ein weiterer technischer Vorteil der parallel zueinander ausgerichteten, planaren Seitenflächen des Kugelkopfs erkennbar. Die parallel zueinander ausgerichteten planaren Seitenflächen können bei einer Drehung des Kugelkopfs in der Kugelpfanne eine Art Einführschräge für die Lagerzungen bilden, so dass die Lagerzungen bei Kontakt mit den planaren Seitenflächen nach außen gedrängt werden. Die Lagerzungen werden so elastisch nach außen ausgelenkt und stellen durch ihre elastische Rückstellkraft die auf den Kugelkopf wirkende Vorspannkraft ein, wenn die Lagerzungen an der sphärischen Außenfläche des Kugelkopfs anliegen. So lässt sich die radiale Vorspannung bei der Montage auf besonders einfache Weise einstellen.

Eine weitere Ausgestaltung der erfindungsgemäßen Gelenkverbindung sieht vor, dass die Begrenzungen der Zugangsöffnung durch seitliche Begrenzungsflächen des Schlittens gebildet sind. Mit anderen Worten kann die Zugangsöffnung zwei parallel zueinander ausgerichtete Begrenzungsflächen aufweisen, die integraler Bestandteil des Schlittens sind. Beispielsweise kann der Schlitten durch ein Spritzgussverfahren hergestellt werden, wobei die seitlichen Begrenzungsflächen des Schlittens beim Spritzgießen ausgeformt werden.

Alternativ ist es möglich, dass die Begrenzungen der Zugangsöffnung durch Zylinderbolzen gebildet sind, die in den Schlitten eingesetzt sind. Solche Zylinderbolzen erhöhen einerseits die Stabilität der Begrenzungen, die insofern eine Rückhaltefunktion für den Kugelkopf haben. Ferner können die Zylinderbolzen zusätzlich für eine Vorspannung des Kugelkopfs in der Kugelpfanne sorgen, wobei diese Vorspannkraft vorzugsweise parallel zu einer Hauptrotationsachse des Kugelkopfs wirkt. Ein weiterer Vorteil der Zylinderbolzen besteht darin, dass diese zur sphärischen Außenfläche des Kugelkopfs einen Punktkontakt halten, so dass Reibkräfte, die einer Drehung des Kugelkopfs in der Kugelpfanne entgegenwirken reduziert sind. Damit ist folglich die Leichtgängigkeit der Gelenkverbindung gewahrt.

Die Längsachsen der Zylinderbolzen sind vorzugsweise senkrecht zu einer Linearbewegungsrichtung des Schlittens ausgerichtet. Durch diese Ausrichtung der Zylinderbolzen ist es beispielsweise möglich, den Kugelkopf, der vorzugsweise drehfest mit einer Koppelstange verbunden ist, in die Kugelpfanne einzusetzen, wenn die Koppelstange senkrecht zur Linearbewegungsrichtung des Schlittens ausgerichtet ist. Durch eine Schwenkbewegung der Koppelstange um die Hauptrotationsachse des Kugelkopfs kann die Koppelstange so ausgerichtet werden, dass deren Mittellängsachse parallel zur Linearbewegungsrichtung des Schlittens ausgerichtet ist. Dabei dreht sich der Kugelkopf in der Kugelpfanne, wodurch der Kugelkopf so ausgerichtet wird, dass die planaren Seitenflächen des Kugelkopfs und die Zylinderbolzen nicht mehr parallel, sondern vielmehr (recht)winklig zueinander angeordnet sind. Der Kugelkopf ist somit in der Kugelpfanne fixiert.

Um die Stabilität der Gelenkverbindung zu verbessern, kann vorgesehen sein, dass die Zylinderbolzen aus Metall gebildet sind.

Ein nebengeordneter Aspekt der Erfindung betrifft eine Stellvorrichtung für ein relativ zu Karosserie eines Fahrzeugs bewegbares Fahrzeugteil, insbesondere eine Fahrzeugtür oder eine Fahrzeugklappe, mit einer zuvor beschriebenen Gelenkverbindung. Die im Zusammenhang mit der zuvor beschriebenen Gelenkverbindung genannten bevorzugten Ausgestaltungen und Vorteile gelten analog auch für die hier beschriebene Stellvorrichtung.

Außerdem sieht ein weiterer nebengeordneter Aspekt der Erfindung ein Verfahren zur Montage einer zuvor beschriebenen Gelenkverbindung vor. Bei dem erfindungsgemäßen Verfahren wird die Koppelstange senkrecht zu einer Linearbewegungsrichtung des Schlittens ausgerichtet und der Kugelkopf koaxial zu einer Einführungsachse der Kugelpfanne positioniert, so dass die planaren Seitenflächen des Kugelkopfs parallel zu den seitlichen Begrenzungen der Zugangsöffnung ausgerichtet sind. Anschließend wird der Kugelkopf durch die Zugangsöffnung in die Kugelpfanne eingesetzt, wobei die planaren Seitenflächen des Kugelkopfs durch die seitlichen Begrenzungen der Zugangsöffnung geführt werden. Schließlich wird die Koppelstange wenigstens um 20°, insbesondere wenigstens um 45°, vorzugsweise um 90°, um die Hauptrotationsachse des Kugelkopfs geschwenkt, so dass die planaren Seitenflächen des Kugelkopfs nicht parallel zu den seitlichen Begrenzungen der Zugangsöffnung orientiert sind.

Die Einführungsachse der Kugelpfanne verläuft vorzugsweise koaxial zur Zugangsöffnung und/oder zur einer kreisförmigen, planaren Grundfläche der Kugelpfanne. Zur Einführung des Kugelkopfs in die Kugelpfanne werden vorzugsweise die Einführungsachse der Kugelpfanne und die Hauptrotationsachse des Kugelkopfs koaxial bzw. deckungsgleich zueinander positioniert. Ferner werden der Kugelkopf und die Zugangsöffnung so zueinander verdreht, dass die planaren Seitenflächen des Kugelkopfs parallel zu den seitlichen Begrenzungen der Zugangsöffnung ausgerichtet sind.

In einer Weiterbildung des erfindungsgemäßen Montageverfahrens ist vorgesehen, dass eine Mittellängsachse der Koppelstange im Schritt c) parallel zur Linearbewegungsrichtung des Schlittens ausgebildet ist.

Das hier beschriebene Montageverfahren vereinfacht die Montage einer Gelenkverbindung und führt so zu signifikanten Kosteneinsparungen.

Die Erfindung wird im Folgenden anhand eines Ausführungsbeispiels unter Bezugnahme auf die beigefügten, schematischen Zeichnungen näher erläutert. Darin zeigen
- Fig. 1: eine perspektivische Ansicht einer Stelleinrichtung mit der erfindungsgemäßen Gelenkanordnung nach einem bevorzugten Ausführungsbeispiel;
- Fig. 2: eine perspektivische Ansicht der Koppelstange mit dem Kugelkopf gemäß Fig. 1;
- Fig. 3: eine Seitenansicht der Koppelstange gemäß Fig. 2;
- Fig. 4: eine Unteransicht der Koppelstange gemäß Fig. 2;
- Fig. 5: eine Draufsicht auf den Schlitten gemäß Fig. 1;
- Fig. 6a: eine Draufsicht auf eine Gelenkverbindung zwischen der Koppelstange und dem Schlitten, wobei die Koppelstange in den Schlitten eingesetzt, jedoch noch nicht verriegelt ist;
- Fig. 6b: eine Querschnittsansicht der Gelenkverbindung gemäß Fig. 6a;
- Fig. 7a: eine Draufsicht auf die Gelenkverbindung gemäß Fig. 6, wobei sich die Koppelstange in einer verriegelten Position befindet; und
- Fig. 7b: eine Querschnittsansicht der Gelenkverbindung gemäß Fig. 7a.

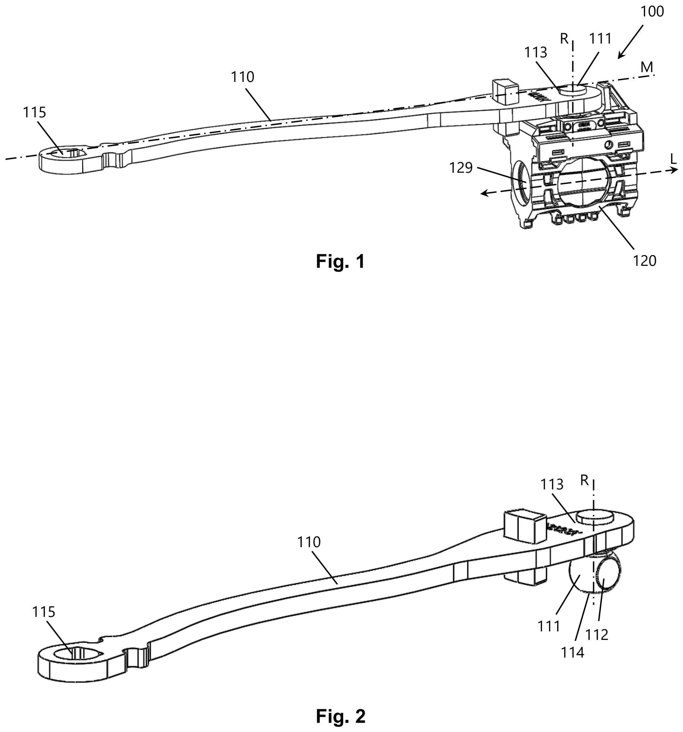

Fig. 1 zeigt eine Stellvorrichtung für ein relativ zu einer Karosserie eines Fahrzeugs bewegbares Fahrzeugteil, insbesondere für eine Fahrzeugtür oder eine Fahrzeugklappe. Die hier gezeigte Stellvorrichtung weist eine Gelenkverbindung 100 auf, die eine Koppelstange 110 der Stellvorrichtung mit einem Schlitten 120 einer Linearführung gelenkig verbindet. Fig. 1 zeigt insoweit den montierten Zustand der Gelenkverbindung 100.

Die Koppelstange 110 weist an ihren Längsenden eine Öse 115 einerseits und ein Kugelkopfauge 113 andererseits auf. Eine die Mittelpunkte des Kugelkopfauges 113 und der Öse 115 verbindende Gerade bildet eine Mittellängsachse M der Koppelstange 110.

Durch das Kugelkopfauge 113 verläuft koaxial zudem eine Hauptrotationsachse R des Kugelkopfs 111, dessen Verbindungsende in Fig. 1 erkennbar ist. Das Verbindungsende des Kugelkopfs 111 ist drehfest in dem Kugelkopfauge 113 fixiert, beispielsweise durch eine Schweißverbindung.

Der Schlitten 120 weist eine Linearführungsaufnahme 129 auf, wobei die Linearführungsaufnahme 129 senkrecht zur Hauptrotationsachse R des Kugelkopfs 111 ausgerichtet ist. Die Linearführungsaufnahme 129 ist im Wesentlichen durch eine Durchgangsbohrung gebildet, welche eine Linearführungsstange aufnehmen kann. Der Schlitten 120 kann linear entlang der Linearführungsstange bewegbar sein, wodurch sich die Linearführung ergibt.

Die Linearführungsaufnahme 129 gibt, insbesondere in Verbindung mit der Linearführungsstange, die Bewegungsrichtung des Schlittens 120 vor. Die Bewegung erfolgt dabei linear entlang der Linearführungsstange. Diese mögliche Bewegungsrichtung des Schlittens 120 wird im Rahmen der vorliegenden Anmeldung als Linearbewegungsrichtung L bezeichnet. Die Linearbewegungsrichtung L ist in Fig. 1 durch einen Doppelpfeil dargestellt.

Fig. 2 zeigt die Koppelstange 110 in einer perspektivischen Ansicht. Erkennbar sind einerseits die Öse 115 und das Kugelkopfauge 113. Außerdem ist der Kugelkopf 111 zu sehen, der drehfest mit der Koppelstange 110 verbunden ist. Der Kugelkopf 111 ist dabei so mit der Koppelstange 110 verbunden und ausgerichtet, dass dessen Hauptrotationsachse R im Wesentlichen senkrecht zur Mittellängsachse M der Koppelstange 110 angeordnet ist.

Der Kugelkopf 111 weist im Wesentlichen eine sphärische Außenkontur auf. Die sphärische Außenkontur wird jedoch an einigen Stellen durchbrochen. Konkret umfasst der Kugelkopf 111 zwei parallel zueinander ausgerichtete, planare Seitenflächen 112. Die planaren Seitenflächen 112 verlaufen jeweils in Ebenen, die parallel zur Hauptrotationsachse R ausgerichtet sind. Somit bilden die planaren Seitenflächen 112 Abflachungen des Kugelkopfs 111.

Ferner umfasst der Kugelkopf 111 eine bodenseitige Abflachung, insbesondere eine planare Bodenfläche 114. Die planare Bodenfläche 114 erstreckt sich senkrecht zur Hauptrotationsachse R. Die planare Bodenfläche 114 kann eine Kreisform aufweisen, wobei die Hauptrotationsachse R durch den Mittelpunkt der Kreisform verläuft. Die planare Bodenfläche 114 ist insofern konzentrisch zur Hauptrotationsachse R ausgerichtet.

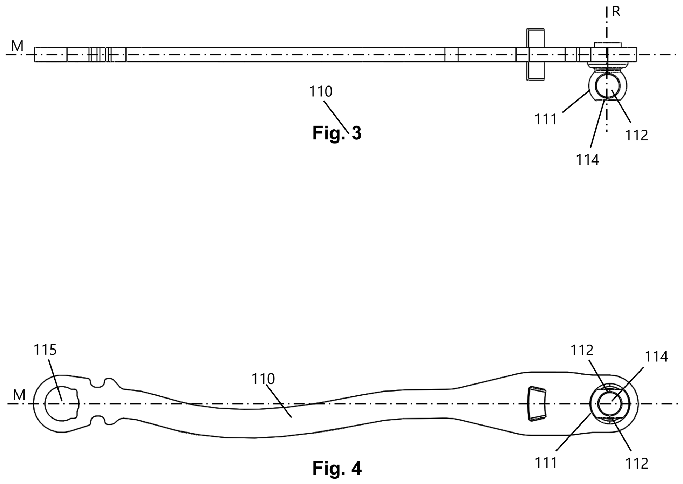

In Fig. 3 ist die planare Bodenfläche 114 gut erkennbar. Die planare Bodenfläche 114 verläuft vorzugsweise parallel zur Mittellängsachse M der Koppelstange 110. Insbesondere kann die planare Bodenfläche 114 parallel zu einer Flachseite der Koppelstange 110 ausgerichtet sein.

In der Draufsicht gemäß Fig. 4 sind die beiden parallel zueinander angeordneten Seitenflächen 112 des Kugelkopfs 111 gut erkennbar. Die beiden planaren Seitenflächen 112 verlaufen in Ebenen, die parallel zur Mittellängsachse M der Koppelstange 110 ausgerichtet sind. Die planaren Seitenflächen 112 können, insbesondere analog zur planaren Bodenfläche 114, eine kreisförmige Kontur aufweisen bzw. eine Kreisform bilden.

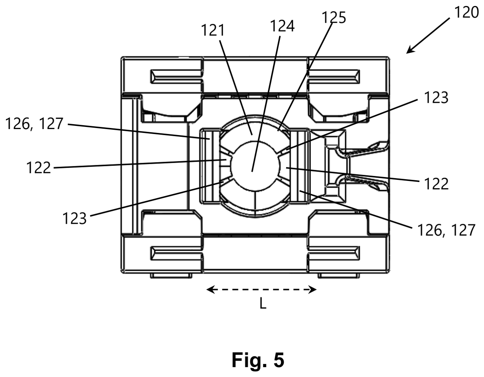

Fig. 5 zeigt den Schlitten 120, der vorzugsweise als Spritzgussteil aus Kunststoff gebildet ist. Der Schlitten 120 weist, vorzugsweise oberhalb der Linearführungsaufnahme 129 (nicht gezeigt), eine Kugelpfanne 121 auf. Die Kugelpfanne 121 umfasst eine planare Grundfläche 124, die im Wesentlichen komplementär zur planaren Bodenfläche 114 des Kugelkopfs 111 ausgebildet ist.

Die sphärische Innenkontur der Kugelpfanne 121 ist durch zwei gegenüberliegend angeordnete Lagerzungen 122 durchbrochen, wobei die Lagerzungen 122 jeweils seitlich davon angeordnete Schmiermitteltaschen 123 begrenzen. Die Schmiermitteltaschen 123 bilden insbesondere Kanäle bzw. Schmiermittel-Vorratsräume, in welchen Schmiermittel, beispielsweise Öl oder Fett, angeordnet sein kann. Auf diese Weise ist eine dauerhafte bzw. langfristige Schmierung der Kugelpfanne 121 gewährleistet.

Die Lagerzungen 122 können integral mit dem Schlitten 120 ausgebildet sein. Die Lagerzungen 122 sind elastisch bzw. insoweit federnd gestaltet, dass sie radial nach außen ausweichen können. Im Ruhezustand ragen die Lagerzungen 122 etwas in die Kugelpfanne 121 hinein, so dass sie beim Einsetzen des Kugelkopfs 111 radial nach außen gedrängt werden und dabei eine elastische Vorspannkraft in radialer Richtung auf den Kugelkopf 111 ausüben. Mit anderen Worten ist eine sphärische Innenkontur der Lagerzungen 122 mit einem Durchmesser ausgestattet, der etwas kleiner als der Durchmesser des Kugelkopfs 111 ist. Damit ist sichergestellt, dass der Kugelkopf 111 im eingesetzten Zustand in der Kugelpfanne 121 durch die radiale Vorspannung der Lagerzungen 122 fixiert ist.

Der Schlitten 120 weist auch eine Zugangsöffnung 125 auf, die den Zugang zur Kugelpfanne 121 von außen ermöglicht. Die Zugangsöffnung 125 weist im Grunde eine kreisförmige Gestalt auf, wobei der Durchmesser der Kreisform größer als der Durchmesser des Kugelkopfs 111 ist. Die Kreisform der Zugangsöffnung 125 wird jedoch durch zwei parallel zueinander ausgerichtete Begrenzungen 126 durchbrochen, die den Durchmesser der Zugangsöffnung 125 in einer Raumrichtung begrenzen. Die Begrenzungen 126 sind bei dem hier dargestellten Ausführungsbeispiel durch zwei parallel zueinander ausgerichtete Zylinderbolzen 127 gebildet, die fest in den Schlitten 120 eingesetzt sind. Die Zylinderbolzen 127 können beispielsweise durch Metallstifte gebildet sein, die seitlich über entsprechende Bohrungen in den Schlitten 120 eingeschoben werden können. Es ist auch möglich, die Zylinderbolzen 127 bereits im Spritzgussverfahren in den Schlitten 120 zu integrieren, beispielsweise mit dem Material des Schlittens 120 zu umspritzen.

Die Begrenzungen 126 sind so positioniert, dass deren Abstand zueinander kleiner als der Durchmesser des Kugelkopfs 111 ist. Gleichzeitig entspricht der Abstand zwischen den beiden Begrenzungen 126 mindestens dem Abstand der beiden planaren Seitenflächen 112 des Kugelkopfs 111. Auf diese Weise ist dafür Sorge getragen, dass der Kugelkopf 111 bei entsprechender Ausrichtung gegenüber der Zugangsöffnung 125 in die Kugelpfanne 121 eingesetzt werden kann. Wenn der Kugelkopf 111 im eingesetzten Zustand um seine Hauptrotationsachse R gedreht wird, erfolgt zwangsläufig eine vertikale Verriegelung des Kugelkopfs 111 in dem Schlitten 120. Sobald die beiden planaren Seitenflächen 112 nicht mehr parallel zu den Begrenzungen 126 der Zugangsöffnung 125 ausgerichtet sind, lässt sich der Kugelkopf 111 nicht mehr aus der Kugelpfanne 121 heben, da der Kugelkopf 111 durch die Begrenzungen 126, insbesondere die Zylinderbolzen 127 blockiert wird.

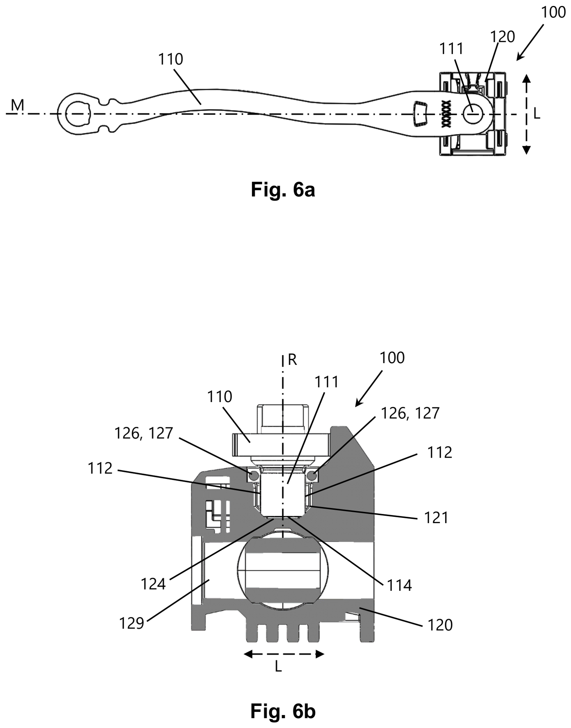

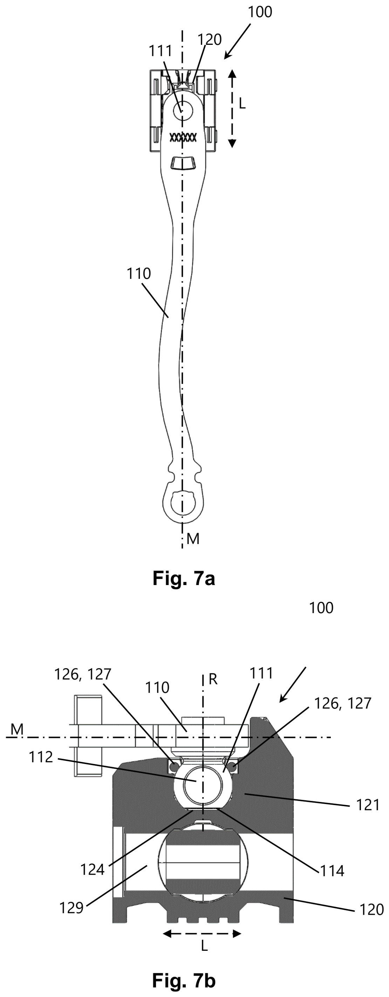

Auf diese Weise lässt sich die Gelenkverbindung 100 besonders leicht montieren. Die entsprechenden Montageschritte sind beispielhaft und anschaulich in den Fig. 6a, 6b, 7a und 7b dargestellt.

Der erste Montageschritt ist in den Fig. 6a und 6b gezeigt. Dabei wird die Koppelstange 111 zunächst mit ihrer Mittellängsachse M derart ausgerichtet, dass die Mittellängsachse M senkrecht zur Linearbewegungsrichtung L des Schlittens 120 ausgerichtet ist. Mit dieser Ausrichtung wird der Kugelkopf 111 koaxial zur Zugangsöffnung 125 angeordnet. In dieser Positionierung verlaufen die planaren Seitenflächen 112 des Kugelkopfs 111 parallel zu den Begrenzungen 126. So kann die Koppelstange 110 entlang der Hauptrotationsachse R des Kugelkopfs 111 in Richtung des Schlittens 120 bewegt werden, wodurch der Kugelkopf 111 durch die Zugangsöffnung 125 gleitet und in die Kugelpfanne 121 gelangt.

Sobald der Kugelkopf 111 in der Kugelpfanne 121 sitzt, insbesondere die sphärische Außenfläche des Kugelkopfs 111 Flächenkontakt zur sphärischen Innenfläche der Kugelpfanne 121 hat, kann die Koppelstange 110 um die Hauptrotationsachse R herum verschwenkt werden. Bei der hier gezeigten Gelenkverbindung 100 besteht zwischen der Bodenfläche 114 des Kugelkopfs 111 und der Grundfläche 124 der Kugelpfanne 121 im eingesetzten Zustand des Kugelkopfs 111 ein Abstand (Fig. 6b). Es ist allerdings möglich, dass sich die Bodenfläche 114 und die Grundfläche 124 berühren.

Zur bajonettartigen Verriegelung der Gelenkverbindung 100 wird die Koppelstange 110 vorzugsweise um einen Winkel von 90° um die Hauptrotationsachse R verschwenkt, so dass sie die in Fig. 7a gezeigte Position einnimmt. Dabei bewirken die planaren Seitenflächen 112 des Kugelkopfs 111, dass die Lagerzungen 122 radial nach außen gedrängt werden, wobei deren elastische Rückstellkraft dann eine entsprechende Vorspannkraft in radialer Richtung auf den Kugelkopf 111 ausübt. Die beiden planaren Seitenflächen 112 wirken dabei ähnlich wie Einführungsschrägen, wodurch die Auslenkung der Lagerzungen 122 begünstigt wird.

In der Ausrichtung der Koppelstange 110 gemäß Fig. 7a verläuft die Mittellängsachse M der Koppelstange 110 parallel zur Linearbewegungsrichtung L des Schlittens 120. Bei dieser Ausrichtung verlaufen auch die planaren Seitenflächen 112 des Kugelkopfs 111 parallel zur Linearbewegungsrichtung L. Da die Begrenzungen 126 der Zugangsöffnung 125, insbesondere die Zylinderbolzen 127, senkrecht zur Linearbewegungsrichtung L ausgerichtet sind, blockieren diese nun eine Bewegung des Kugelkopfs 111 entlang der Hauptrotationsachse R. Die Gelenkverbindung 100 ist so in einer Richtung entlang der Hauptrotationsachse R, insbesondere bajonettverschlussartig, fixiert. Wie in Fig. 7b gut erkennbar ist, sind die Seitenflächen 112 des Kugelkopfs 111 in der verriegelten Position vorzugsweise parallel zur Längsbewegungsrichtung L des Schlittens 120 ausgerichtet.

Wie aus der Zusammenschau der Fig. 6a, 6b, 7a und 7b gut erkennbar ist, lässt sich die hier beschriebene Gelenkverbindung 100 besonders einfach und schnell montieren. Dies hat erhebliche Vorteile, insbesondere bei der Montage der Gelenkverbindung 100 bei einem Fahrzeughersteller, bei welchem eine solche Gelenkverbindung in den Produktionsprozess von Fahrzeugen, insbesondere von Fahrzeugtüren oder Fahrzeugklappen, integriert werden soll.

## Patentansprüche

1. Gelenkverbindung (100) zwischen einer Koppelstange (110) und einem Schlitten (120) einer Linearführung mit einem Kugelkopf (111), der drehfest mit der Koppelstange (110) verbindbar oder verbunden ist, und mit einer Kugelpfanne (121), die im Schlitten (120) ausgebildet ist, wobei der Schlitten (120) eine Zugangsöffnung (125) aufweist, über welche der Kugelkopf (111) in die Kugelpfanne (121) einsetzbar ist und die zwei gegenüberliegende, jeweils geradlinig und parallel zueinander ausgerichtete seitliche Begrenzungen (126) aufweist, und wobei der Kugelkopf (111) zwei parallel zueinander ausgerichtete planare Seitenflächen (112) umfasst, deren Abstand zueinander höchstens dem Abstand der seitlichen Begrenzungen (126) entspricht.

2. Gelenkverbindung (100) nach Anspruch 1, wobei die planare Seitenflächen (112) des Kugelkopfs (111) parallel zu einer Mittellängsachse M der Koppelstange (110) ausgerichtet sind.

3. Gelenkverbindung (100) nach Anspruch 2, wobei die planaren Seitenflächen (112) parallel zu einer Hauptrotationsachse R des Kugelkopfs (111) ausgerichtet sind.

4. Gelenkverbindung (100) nach einem der vorhergehenden Ansprüche, wobei der Kugelkopf (111) eine planare Bodenfläche (114) aufweist, die parallel zu einer Mittellängsachse M der Koppelstange (110) und senkrecht zu einer Hauptrotationsachse R des Kugelkopfs (111) ausgerichtet ist.

5. Gelenkverbindung (100) nach einem der vorhergehenden Ansprüche, wobei die Kugelpfanne (121) eine Vorspanneinrichtung zum Aufbringen einer radialen Vorspannung auf den Kugelkopf (111) aufweist.

6. Gelenkverbindung (100) nach Anspruch 5, wobei die Vorspanneinrichtung mehrere Lagerzungen (122) aufweist, die zumindest abschnittsweise voneinander beabstandet sind und Schmiermitteltaschen (123) begrenzen.

7. Gelenkverbindung (100) nach einem der vorhergehenden Ansprüche, wobei die Begrenzungen (126) der Zugangsöffnung (125) durch seitliche Begrenzungsflächen des Schlittens (120) gebildet sind.

8. Gelenkverbindung (100) nach einem der Ansprüche 1 bis 6, wobei die Begrenzungen (126) der Zugangsöffnung (125) durch Zylinderbolzen (127) gebildet sind, die in den Schlitten (120) eingesetzt sind.

9. Gelenkverbindung (100) nach Anspruch 8, wobei die Längsachsen der Zylinderbolzen (127) in einer Ebene angeordnet sind, die senkrecht zu einer Hauptrotationsachse R des Kugelkopfs (111) ausgerichtet ist.

10. Gelenkverbindung (100) nach Anspruch 8 oder 9, wobei die Längsachsen der Zylinderbolzen (127) senkrecht zu einer Linearbewegungsrichtung L des Schlittens (120) ausgerichtet sind.

11. Gelenkverbindung (100) nach einem der Ansprüche 8 bis 10, wobei die Zylinderbolzen (127) aus Metall gebildet sind.

12. Stellvorrichtung für ein relativ zur Karosserie eines Fahrzeugs bewegbares Fahrzeugteil, insbesondere eine Fahrzeugtür oder eine Fahrzeugklappe, mit einer Gelenkverbindung (100) nach einem der vorstehenden Ansprüche.

13. Verfahren zur Montage einer Gelenkverbindung (100) nach einem der Ansprüche 1 bis 11, wobei
a) die Koppelstange (110) senkrecht zu einer Linearbewegungsrichtung L des Schlittens (120) ausgerichtet und der Kugelkopf (111) koaxial zu einer Einführungsachse der Kugelpfanne (121) positioniert wird, so dass die planaren Seitenflächen (112) des Kugelkopfs (111) parallel zu den seitlichen Begrenzungen (126) der Zugangsöffnung (125) ausgerichtet sind;
b) der Kugelkopf (111) durch die Zugangsöffnung (125) in die Kugelpfanne (121) eingesetzt wird, wobei die planaren Seitenflächen (112) des Kugelkopfs (111) durch die seitlichen Begrenzungen (126) der Zugangsöffnung (125) geführt werden; und
c) die Koppelstange (110) wenigstens um 20°, insbesondere wenigstens um 45°, vorzugsweise um 90°, um die Hauptrotationsachse des Kugelkopfs (111) geschwenkt wird, so dass die planaren Seitenflächen (112) des Kugelkopfs (111) nicht-parallel zu den seitlichen Begrenzungen (126) der Zugangsöffnung (125) orientiert sind.

14. Verfahren nach Anspruch 13, wobei eine Mittellängsachse M der Koppelstange (110) im Schritt c) parallel zur Linearbewegungsrichtung L des Schlittens (120) ausgerichtet wird.
